# EUROPÄISCHE PATENTSCHRIFT

(11) **EP 3 493 466 B1**
(45) Veröffentlichungstag und Bekanntmachung des Hinweises auf die Patenterteilung: **30.09.2020**
(21) Anmeldenummer: 18189663.0
(22) Anmeldetag: 20.08.2018
(51) Int. Cl.: G06F 3/01, H04M 11/00, H04M 1/02, H04M 11/02

(54) **SPRECHSTELLE FÜR EIN INTERCOM-NETZWERK**
STATION FOR AN INTERCOM NETWORK
POSTE TÉLÉPHONIQUE POUR UN RÉSEAU D'INTERCOMMUNICATION

(30) Priorität: 29.11.2017 DE 102017128282; 28.03.2018 DE 102018107447
(43) Veröffentlichungstag der Anmeldung: 05.06.2019
(73) Patentinhaber: RIEDEL Communications International GmbH, 42109 Wuppertal (DE)
(72) Erfinder: Schaaf, Stephan, 54570 Oberstadtfeld (DE); Sieben, Hubert, 42369 Wuppertal (DE); Riedel, Thomas, 42109 Wuppertal (DE)
(74) Vertreter: Roche, von Westernhagen & Ehresmann

(56) Entgegenhaltungen:
- EP-A1- 2 211 256
- DE-A1-102014 104 811
- JP-A- 2000 200 141

## Beschreibung

Die Erfindung betrifft eine Sprechstelle für ein Intercom-Netzwerk nach Anspruch 1.

Die Anmelderin entwickelt und fertig derartige Sprechstellen für Intercom-Netzwerke sowie entsprechende Intercom-Netzwerke seit mehr als drei Jahrzehnten.

Zur Erläuterung der Funktion und der Einsatzzwecke einer Sprechstelle wird auf die nachfolgenden Schutzrechtsanmeldungen der Anmelderin hingewiesen: DE 10 2014 011 963 A1 und die nachveröffentlichten Patentanmeldungen DE 10 2017 107 148 A1, DE 10 2017 107 150 A1, DE 10 2017 106 946 A1, DE 10 2017 116 002 A1, DE 10 2017 116 273 A1.

Bei einer von der Anmelderin gefertigten, entwickelten und in großen Stückzahlen in Verkehr gebrachten Sprechstelle der gattungsgemäßen Art des Standes der Technik ist ein Vielzahl von Bedienelementen und Displays an einer Frontseite des Gehäuses der Sprechstelle angeordnet. Die Bedienelemente, Displays und auch die Anschlüsse an der Frontseite, z. B. Mikrofonanschluss oder ein Headsetanschluss, sind dicht gedrängt angeordnet. Die Anordnungsfläche, entlang der Bedienelemente, Displays und auch Anschlüsse an der Frontseite angeordnet werden können, ist prinzipiell begrenzt. Beispielsweise können die Abmessungen des Gehäuses der Sprechstelle vorgegeben sein, da die Sprechstelle in einem vorgegebenen Montagerahmen oder in einer Halterung, in einem sogenannten Rack, untergebracht werden muss. Die Innenabmessungen der Fächer in dem Rack zur Aufnahme einer Sprechstelle sind aber häufig genormt bzw. vorgegeben.

Es besteht dabei grundsätzlich das Problem, auf der Frontseite der Sprechstelle dichtgedrängt eine Vielzahl von Bedienelementen, die insbesondere programmierbar ausgebildet sind, also mit unterschiedlichen Funktionen belegbar sind, und auch eine Vielzahl von Displays anzuordnen und unterzubringen. Auf den Displays können Informationen angezeigt werden, die zu wenigstens einem, vorteilhafterweise zu mehreren Bedienelementen, in Beziehung stehen. Es ist bereits bekannt, die Displays als Touchscreen-Displays auszubilden, so dass an dem Display nicht nur Informationen anzeigbar sind, sondern an dem Display auch Daten eingebbar sind. Beispielsweise kann eine Eingabe erfolgen, dass ein bestimmtes Bedienelement eine bestimmte Funktionalität erhalten soll, aufgeben soll oder in Bezug zu einem bestimmten Bedienelement eine bestimmte Information gespeichert werden soll.

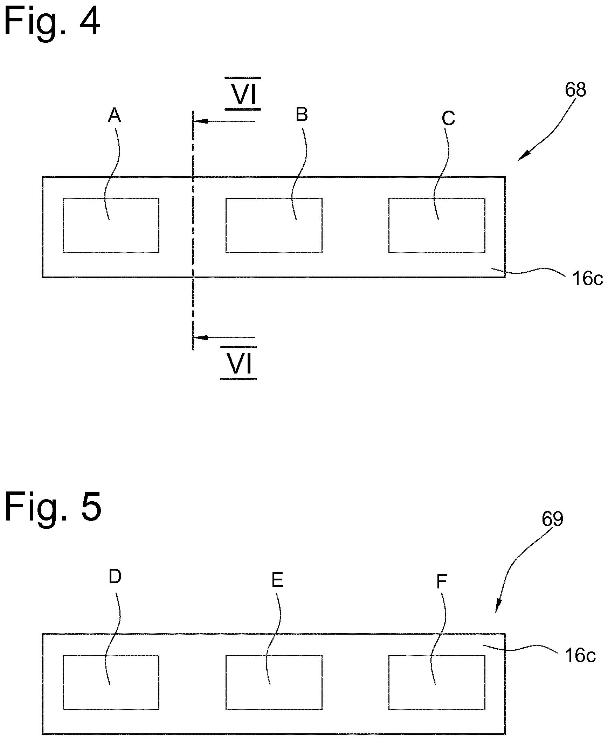

Aus Dokument DE 10 2014 104 811 A1 der Anmelderin geht eine weitere Sprechstelle hervor. Hier wird bei dem Ausführungsbeispiel gemäß Fig. 5 vorgeschlagen, ein Display 24 vorzusehen, das oberhalb des Frontpanel angeordnet ist. An anderer Stelle erwähnt diese Druckschrift, dass ein Display auch in das Frontpanel integriert werden kann. Dieses Dokument befasst sich nicht mit der Problematik einer dicht gedrängten Anordnung von Bedienelementen und Displays an der Vorderseite der Sprechstelle. Aus der Druckschrift geht insbesondere nicht hervor, dass ein Touchscreen-Display zwischen einer Ruheposition und einer Schaltposition verlagerbar ist.

Ausgehend von einer Sprechstelle des Standes der Technik besteht die Aufgabe der Erfindung darin, die Sprechstelle derartig weiterzubilden, dass eine besonders dichte Anordnung von Bedienelementen, Displays und/oder Anschlüssen an der Frontseite der Sprechstelle und/oder ein erhöhter Bedienkomfort der Sprechstelle möglich wird.

Die Erfindung löst die Aufgabe mit den Merkmalen des Anspruches 1, insbesondere mit denen des Kennzeichenteils, und ist demgemäß dadurch gekennzeichnet, dass das Display zwischen einer Ruheposition und einer Schaltposition verlagerbar ist, wobei infolge einer Verlagerung des Displays in die Schaltposition das Display einen zweiten Funktionszustand einnimmt, in dem an dem Display Informationen zweiter Art anzeigbar und/oder Daten zweiter Art eingebbar sind, die zu wenigstens einem Bedienelement in Bezug stehen.

Das Prinzip der Erfindung besteht im Wesentlichen darin, das Display, welches als Touchscreen-Display ausgebildet ist, verlagerbar auszubilden. Das Display kann zwischen einer Ruheposition und einer Schaltposition verlagert werden. Infolge einer Verlagerung des Displays in die Schaltposition kann das Display erfindungsgemäß einen zweiten Funktionszustand einnehmen. In dem zweiten Funktionszustand sind an dem Display z. B. Informationen zweiter Art anzeigbar. Alternativ oder zusätzlich sind bei dem in dem zweiten Funktionszustand befindlichen Display an dem Display Daten zweiter Art eingebbar. Die anzeigbaren Informationen zweiter Art bzw. die eingebbaren Daten zweiter Art stehen zu wenigstens einem Bedienelement in Bezug. In Folge einer Möglichkeit der Verlagerung des Displays aus einer Ruheposition in eine Schaltposition kann eine weitere Funktionsebene des Touchscreens des Displays erreicht werden.

Befindet sich das Display in einer Ruheposition oder einer Normalposition, weist das Display einen ersten Funktionszustand auf. In diesem ersten Funktionszustand ist das Display wie ein herkömmliches Display einsetzbar. Das Display kann Informationen erster Art anzeigen und eine Eingabe von Daten erster Art ermöglichen. Die angezeigten Informationen erster Art bzw. die eingegebenen Daten erster Art stehen zu wenigstens einem Bedienelement in Bezug. Von der Erfindung ist auch umfasst, dass Informationen erster Art oder Daten erster Art zu wenigstens einem Bedienelement in Bezug gesetzt werden können, beispielweise durch eine Steuerung oder eine Recheneinheit der Sprechstelle, die mit dem Display in Verbindung steht.

Beispielsweise kann die Sprechstelle eine Vielzahl von Auswahltasten umfassen, wobei die Mehrzahl in unterschiedliche Gruppen unterteilt sein kann. Jeweils einer Gruppe von Auswahltasten kann ein Display zugeordnet sein. Das in einem ersten Funktionszustand befindliche Display kann - insbesondere in räumlicher unmittelbarer Zuordnung zu den Bedienelementen der Auswahltasten - alle Informationen erster Art anzeigen, die unmittelbar zu dem Bedienelement in Bezug stehen. Beispielsweise kann die Information erster Art einen Namen der Auswahltaste oder eine Nummer der Auswahltaste oder eine Information über eine andere Sprechstelle enthalten oder umfassen, mit der die vorliegende Sprechstelle bei Betätigung einer bestimmten Auswahltaste verbindbar ist. An dem Display können Daten erster Art bei im ersten Funktionszustand befindlichem Display eingegeben werden. Beispielsweise kann durch Betätigen des Touchscreen-Displays derart, dass ein bestimmtes Anzeigefeld berührt wird, ein bestimmtes Bedienelement oder eine bestimmte Auswahltaste aufgerufen werden, wobei dann z. B. eine ergänzende Information wie z. B. ein Lautstärkewert oder eine Bezeichnung oder Nummerierung der Auswahltaste oder eine Information über diese Auswahltaste an dem Display eingegeben oder geändert werden kann.

Gemäß der Erfindung kann aber das Display durch manuelle Betätigung, beispielsweise durch Kraftausübung entlang einer Richtung eines Normalenvektors der normal zu dem eben ausgebildeten Display steht, von der Ruheposition in eine Schaltposition verlagert werden. Die Schaltposition kann von einem Sensor detektiert werden und diese Detektion kann einer Steuerung gemeldet werden. Die Steuerung der Sprechstelle kann sodann veranlassen, dass das Display infolge des Erreichens der Schaltposition aus einem ersten Funktionszustand in einen zweiten Funktionszustand überführt wird. Sobald das Display seinen zweiten Funktionszustand eingenommen hat, können an dem Display Informationen zweiter Art angezeigt werden. Es kann also beispielsweise eine andere Informationsebene oder ein anderes Level erreicht werden. Auch kann an dem im zweiten Funktionszustand befindlichen Display eine Eingabe von Daten zweiter Art erfolgen, also anderer Daten, als die Daten erster Art. Hierdurch wird die Möglichkeit bereitgestellt, das Display vielfältiger zu nutzen, als es bisher üblich war. Durch Schaltbetätigung des Displays, also durch Verlagerung des Displays aus einer Ruheposition in eine Schaltposition, kann es andere Funktionszustände oder Steuerebenen einnehmen.

Vorteilhafterweise ist das Display in seine Ruheposition hin vorgespannt. Es kann also nach Erreichen der Schaltposition automatisch, sobald die vom Benutzer ausgeübte Verlagerungskraft nachlässt oder aufgehoben wird, in die Ruheposition zurückkehren. Alternativ kann vorgesehen sein, dass das Display seine Schaltposition einnimmt und z. B. erneut betätigt werden muss, um in seine Ruheposition zurückzukehren.

Möglich und von der Erfindung umfasst ist auch, wenn an dem Sensor nicht nur eine einmalige Betätigung des Displays im Sinne einer Verlagerung in die Schaltposition detektierbar ist, sondern innerhalb eines vorgegebenen Zeitraums auch eine mehrmalige Betätigung festgestellt werden kann. Beispielsweise kann vorgesehen sein, dass durch zweimaliges, kurz hintereinander folgendes Verlagern des Displays in die Schaltposition, eine weitere Funktionsebene, entsprechend einem dritten Funktionszustand des Displays, erreicht wird. Weitere mehrmalige, z. B. drei- oder viermalige Betätigungen des Displays im Sinne einer Verlagerung aus der Ruheposition in die Schaltposition können gleichermaßen erfasst werden und zu weiteren Funktionszuständen des Displays führen.

Die Sprechstelle gemäß der Erfindung ist ein Gerät, das ausschließlich zur Verwendung in einem Intercom-Netzwerk vorgesehen ist. Ein Intercom-Netzwerk dient der Übertragung von Audiosignalen zwischen Teilnehmern an unterschiedlichen Sprechstellen. Es handelt sich um sogenannte Punkt-zu-Punkt-Verbindungen. Sämtliche Leitungen verlaufen über eine Vermittlungsstelle, die die Leitungswege vermittelt, administriert und verwaltet.

Die Sprechstelle umfasst ein Gehäuse, das beispielsweise aus Metall bestehen kann. Das Gehäuse ist quaderförmig ausgebildet. Es umfasst eine Gehäusefront, also eine Vorderseite, und eine gegenüberliegende Gehäuserückseite. An der Gehäusefront ist bei der erfindungsgemäßen Sprechstelle eine Vielzahl von Bedienelementen angeordnet. Es kann sich hierbei beispielsweise um Auswahltasten handeln, aber auch um andere Bedienelemente wie Potentiometer, Drehregler, Drehknopf, Taster oder dergleichen. Des Weiteren sind an der Sprechstelle ein Display oder mehrere Displays angeordnet. Wenigstens ein Display ist als Touchscreen-Display ausgebildet. Ein Touchscreen-Display ermöglicht dem Benutzer eine Anzeige von Informationen, aber auch eine Eingabe von Informationen, durch Berührung oder durch Annäherung eines Fingers eines Benutzers an das Display.

Gemäß der Erfindung weist die Sprechstelle mehrere Bedienelemente auf, die eine Vielzahl von Auswahltasten umfassen. Als Auswahltasten werden Elemente bezeichnet, die zumindest aus einer Ruheposition in eine Arbeitsposition hin verlagert werden können. Vorzugsweise können Auswahltasten gemäß der Erfindung ausgehend von einer Ruheposition, die z. B. als Mittelposition bezeichnet wird, in zwei unterschiedliche Bewegungsrichtungen verlagert werden, um eine erste oder eine zweite Schaltposition oder Arbeitsposition zu erreichen. Es kann sich dabei insbesondere um Auswahltasten handeln, die je nach Schaltzustand entweder eine Hör- (Listen-)Funktion ausüben oder eine Speak- (Sprech-)Funktion ausüben.

Infolge der Betätigung einer Auswahltaste stellt die Sprechstelle eine unmittelbare Hör- und/oder Sprechverbindung zu einer ausgewählten anderen Sprechstelle des Intercom-Netzwerkes, insbesondere über eine Vermittlungsstelle, bereit. Durch Betätigung einer Auswahltaste wird also unmittelbar ein Teilnehmer einer anderen Sprechstelle angesprochen.

Derartige Sprechstellen und Intercom-Netzwerke finden beispielweise im Veranstaltungsbereich, z. B. bei Live-Veranstaltungen wie Sportveranstaltungen oder Musikveranstaltungen, Anwendung.

Die Erfindung umfasst Sprechstellen, die mit anderen Sprechstellen des Intercom-Netzwerkes über eine Vermittlungsstelle verbunden sind, sowie Sprechstellen, die unmittelbar mit anderen Sprechstellen des Intercom-Netzwerkes - ohne Zwischenschaltung einer Vermittlungsstelle - verbunden sind.

An dem Display können, wenn sich dieses in einem ersten Funktionszustand oder Ruhezustand befindet, Informationen erster Art angezeigt werden. Auch können an dem Display, welches sich in einem ersten Funktionszustand befindet, Daten erster Art eingegeben werden. Die Informationen erster Art bzw. die Daten erster Art stehen zu mindestens einem Bedienelement in Bezug oder in Relation oder mit mindestens einem Bedienelement in Verbindung. Dies bedeutet, dass die Informationen oder Daten Parameter oder Eigenschaften oder Funktionen oder Verwendungen oder Bestimmungen oder Eingriffsmöglichkeiten des Bedienelementes umfassen oder damit in Verbindung stehen.

Beispielsweise können zu den Informationen und Daten Namen, Nummern, Bezeichnungen, Einstellungen, Parameter, wie Lautstärkewerte, Helligkeitswerte, Adresswerte oder andere Informationen gehören.

Aus der EP 2 211 256 A1 geht ein Smartphone hervor, bei dem ein Display 210 verlagerbar ausgebildet ist. Infolge einer Verlagerung kann ein Schalter 261 betätigt werden. Die Verlagerbarkeit des Displays gestaltet das Display 210 zu einem Touchscreen-Display aus. Ein verlagerbares Touchscreen-Display ist aus der Druckschrift nicht bekannt. Des Weiteren offenbart die Druckschrift nicht, dass infolge einer Verlagerung eines Touchscreen-Displays in eine Schaltposition dieses einen zweiten Funktionszustand einnimmt, in dem an dem Touchscreen-Display Informationen zweiter Art anzeigbar und/oder Daten zweiter Art eingebbar sind, die zu wenigstens einem Bedienelement in Bezug stehen.

Gemäß einer vorteilhaften Ausgestaltung der Erfindung ist das Gehäuse quaderförmig oder im Wesentlichen quaderförmig ausgebildet. Dies ermöglicht einen Rückgriff auf herkömmliche Formen von Gehäusen von Sprechstellen.

Gemäß einer weiteren vorteilhaften Ausgestaltung der Erfindung ist wenigstens ein Bedienelement programmierbar ausgebildet. Dies bedeutet, dass mindestens einem Bedienelement durch eine Eingabe einer Bedienperson oder durch Anweisung von der Vermittlungsstelle wenigstens eine änderbare Funktion oder Eigenschaft oder ein Parameterwert zugewiesen werden kann.

Gemäß einer weiteren vorteilhaften Ausgestaltung der Erfindung weist die Sprechstelle mehrere als Touchscreen-Display ausgebildete Displays auf. Diese sind jeweils zwischen einer Ruheposition und einer Schaltposition verlagerbar. Vorteilhafterweise sind einem Display eine Gruppe von Bedienelementen zugeordnet.

Gemäß einer weiteren vorteilhaften Ausgestaltung der Erfindung ist die Verlagerung des Displays in die Schaltposition von wenigstens einem Sensor erfassbar. Hierdurch kann ein Signal generiert werden, das an eine Steuerung der Sprechstelle weitergeleitet wird.

Gemäß einer weiteren vorteilhaften Ausgestaltung der Erfindung weist die Sprechstelle eine Steuerung auf, die mit dem Sensor in Verbindung steht. Hierdurch kann eine zentrale, von der Steuerung initiierte Schaltung und Ansteuerung des Displays erfolgen.

Die Steuerung kann beispielsweise einen Mikroprozessor umfassen, auf dem beispielsweise ein Computer-Programm abläuft.

Gemäß einer weiteren vorteilhaften Ausgestaltung der Erfindung schaltet die Steuerung das Display aus seinem ersten Funktionszustand in seinen zweiten Funktionszustand. Auch die umgekehrte Schaltung des Displays aus dem zweiten Funktionszustand in den ersten Funktionszustand kann durch die Steuerung vorgenommen werden. Eine Schaltung findet z. B. dann statt, wenn der Sensor das Erreichen einer Schaltposition oder das Erreichen der Ruheposition des Displays feststellt.

Es kann auch vorgesehen sein, dass nach einem bestimmten Zeitraum nach Erreichen einer Schaltposition des Displays eine Zurückschaltung des Displays aus dem zweiten Funktionszustand in den ersten Funktionszustand von der Steuerung veranlasst wird.

Gemäß einer vorteilhaften Ausgestaltung der Erfindung kann die Steuerung eine Schaltung des Displays aus einem ersten Funktionszustand in einen zweiten Funktionszustand bereits bei einer kurzzeitigen Verlagerung des Displays in die Schaltposition vornehmen. Genügt hier ein einfaches kurzzeitiges Erreichen der Schaltposition, also beispielsweise eine Art Antippen des Displays.

Das Erreichen der Schaltposition des Displays kann der Bedienperson, die das Display aus der Ruheposition in die Schaltposition überführt hat, taktil angezeigt werden. Dem Benutzer wird so signalisiert, dass eine Schaltposition des Displays erreicht worden ist.

Alternativ oder zusätzlich kann vorgesehen sein, dass die Steuerung die Schaltung auch vornimmt, wenn das Display fortwährend in der Schaltposition verbleibt, bzw. die Schaltposition erreicht und sodann dort für einen bestimmten Zeitraum verbleibt. Die Verweildauer des Displays in der Schaltposition kann dabei gemäß einer Ausführungsform ebenfalls vom Sensor erfasst und/oder von der Steuerung verarbeitet und verwendet werden. So ist beispielsweise auch von der Erfindung erfasst, wenn die Steuerung bei einem initialen Erreichen der Schaltposition durch das Display diese das Display von einem ersten in einen zweiten Funktionszustand schaltet, aber bei einem fortwährenden Verweilen oder Verbleiben des Displays in der Schaltposition über eine vorgegebene Schwellzeit von beispielsweise einer oder zwei Sekunden hinaus, dieses Verweilen feststellt und sodann unmittelbar das Display aus dem zweiten in einen dritten oder anderen Funktionszustand überführt oder schaltet. Gleichermaßen kann bei Überschreiten weiterer Grenzwerte einer Mindestverweildauer des Displays in einer Schaltposition von z. B. zwei, drei oder vier Sekunden die Steuerung veranlassen, dass das Display in einen weiteren, z. B. vierten, fünften oder sechsten Funktionszustand überführt oder geschaltet wird.

Gleichermaßen kann bei einer Ausführungsform der Erfindung vorgesehen sein, dass die Steuerung eine Schaltung des Displays aus seinem ersten Funktionszustand in seinen zweiten Funktionszustand bei einmaliger oder bei mehrmaliger Verlagerung des Displays in die Schaltposition vornimmt.

Gemäß einer Variante der Erfindung ist das Display vollständig verlagerbar. Je nach Dimensionierung, Größe und Ausgestaltung des Displays kann dieses insgesamt verlagert werden. Gemäß einer alternativen Ausgestaltung der Erfindung ist das Display nur oder auch abschnittsweise, d. h. mit Teilbereichen gemäß seiner Erstreckung, verlagerbar ausgebildet.

Die Verlagerungsbewegung des Displays kann entlang einer Geraden erfolgen. Die Gerade kann von einem Normalenvektor, der zu einer ebenen Fläche der Gehäusefront senkrecht steht, gebildet sei. Von der Erfindung ist auch umfasst, wenn die Verlagerungsbewegung des Displays entlang einer anderen Bahn, z. B. auch entlang einer zur Gehäusefront geneigten Bahn, oder entlang einer gekrümmten Bahn durchführbar ist. Auch ist von der Erfindung umfasst, wenn das Display zur Durchführung der Verlagerungsbewegung geneigt wird oder gekippt wird oder verschwenkt wird.

Weitere Vorteile der Erfindung ergeben sich aus den nicht zitierten Unteransprüchen sowie anhand der nachfolgenden Beschreibung der in den Zeichnungen dargestellten Ausführungsbeispiele. In den Zeichnungen zeigen:
- Fig. 1: ein erstes Ausführungsbeispiel einer erfindungsgemäßen Sprechstelle in einer teilgeschnittenen schematischen Vorderansicht, die die Gehäusefront darstellt,
- Fig. 2: die Sprechstelle der Fig. 1 in einer schematischen Rückansicht unter Darstellung der Gehäuserückseite,
- Fig. 3: in einer schematischen, blockschaltbildartigen vereinfachten, illustrierenden Darstellung ein Ausführungsbeispiel eines erfindungsgemäßen Intercom-Netzwerkes mit drei erfindungsgemäßen Sprechstellen,
- Fig. 4: in einer schematischen, vergrößerten Einzeldarstellung das Display 16c der Sprechstelle der Fig. 1, in einem ersten Funktionszustand,
- Fig. 5: das Display in einer Darstellung der Fig. 4, in einem zweiten Funktionszustand,
- Fig. 6: das Display der Fig. 4, in einer teilgeschnittenen schematischen Ansicht etwa entlang der Schnittlinie VI-VI in Fig. 4, wobei zusätzlich elektronische Elemente in der Sprechstelle, wie Sensoren, eine Steuerung, Federelemente und Signalleitungen dargestellt sind,
- Fig. 7: das Display in einer Darstellung gemäß Fig. 6 in einem zweiten Funktionszustand, entsprechend einer erreichten Schaltposition,
- Fig. 8: ein Ausführungsbeispiel eines Displays einer erfindungsgemäßen Sprechstelle in perspektivischer, schematischer Einzeldarstellung,
- Fig. 9: das Display der Fig. 8 in Rückansicht, etwa gemäß Ansichtspfeil IX in Fig. 8, und
- Fig. 10: das Display der Fig. 9 in einer schematischen Explosionsdarstellung.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

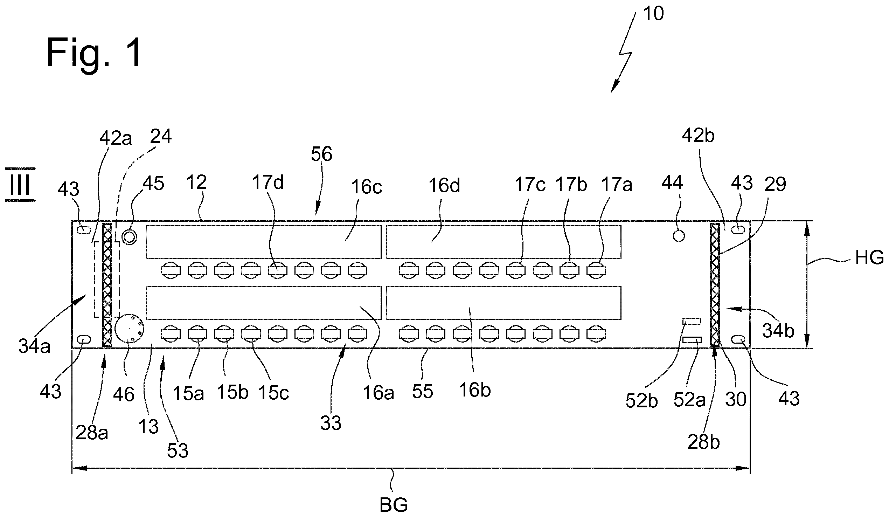

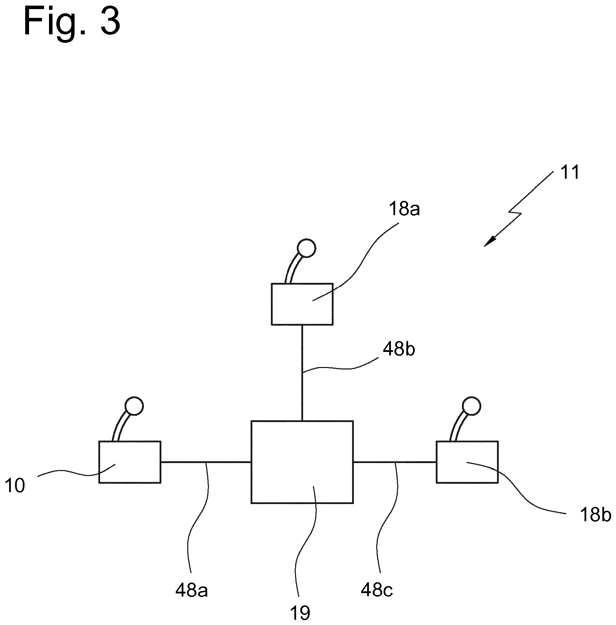

Fig. 1 zeigt in einer sehr schematischen Vorderansicht ein Ausführungsbeispiel einer erfindungsgemäßen Sprechstelle 10. Die Sprechstelle dient zur Verwendung in einem Intercom-Netzwerk 11, wie es in Fig. 3 angedeutet ist. Ein solches Intercom-Netzwerk 11 umfasst mehrere Sprechstellen 10, 18a, 18b, die jeweils über Verbindungsleitungen 48a, 48b, 48c mit einer Vermittlungsstelle 19 verbunden sind. Derartige Audio-Netzwerke werden beispielsweise bei Live-Veranstaltungen, wie Musikveranstaltungen oder Sportveranstaltungen, aber auch im Bereich der Veranstaltungstechnik, z. B. für Theaterbühnen, oder für vergleichbare Anwendungen eingesetzt.

Jede der Sprechstellen 10, 18a, 18b des Intercom-Netzwerkes 11 gemäß Fig. 3 kann eine Sprechstelle gemäß Fig. 1 umfassen.

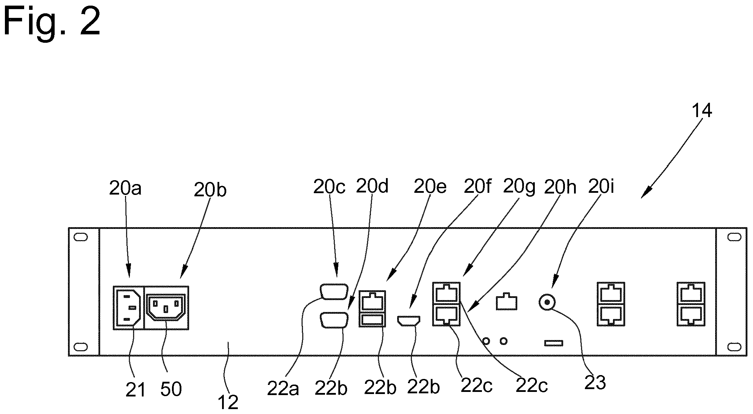

Ausweislich Fig. 1 umfasst das Ausführungsbeispiel der erfindungsgemäßen Sprechstelle 10 ein Gehäuse 12, mit einer Gehäusefront 13 und einer Gehäuserückseite 14, die in Fig. 2 dargestellt ist.

An der Gehäusefront 13 ist eine Vielzahl von Bedienelementen 15a, 15b, 15c, d angeordnet, wobei hier lediglich einige der Bedienelemente bezeichnet sind. Außerdem ist an der Frontseite 13 eine Vielzahl von Displays 16a, 16b, 16c, 16d angeordnet. Vorteilhaft ist jedes der Displays 16a, 16b, 16c, 16d, jeweils einer Gruppe mehrerer Bedienelemente 15a, 15b, 15c, 15d zugeordnet.

Bei dem Ausführungsbeispiel der Fig. 1 ist jeweils ein Display einer Gruppe von acht Bedienelementen 15a, 15b, 15c, 15d zugeordnet.

Bei dem Ausführungsbeispiel der Fig. 1 weist die Sprechstelle 10 Bedienelemente 15a, 15b, 15c, 15d in Form von Auswahltasten 17a, 17b, 17c, 17d auf. Die Auswahltasten können ein Betätigungselement umfassen, das ausgehend von seiner Mittellage nach Art eines Hebels verlagerbar ist, und zwar in eine erste Schaltposition oder alternativ in eine zweite Schaltposition. Das Betätigungselement kann beispielsweise bezogen auf Fig. 1 nach oben oder nach unten betätigt werden, um entweder in einen Sprechmodus oder in einen Hörmodus zu gelangen.

Die Bedienelemente 15a, 15b, 15c, 15d, 17a, 17b, 17c, 17d sind programmierbar, d. h. jeder der Auswahltasten 17a, 17b, 17c, 17d kann eine bestimmte Sprechstelle des Intercom-Netzwerkes 11 zugewiesen werden. Beispielsweise kann der Auswahltaste 17c der Sprechstelle 10 der Fig. 1 die Sprechstelle 18a des Intercom-Netzwerkes 11 der Fig. 3 zugewiesen werden. Durch Betätigung dieser Auswahltaste 17c kann die Bedienperson der Sprechstelle 10 der Fig. 1 also eine unmittelbare Hörverbindung oder eine unmittelbare Sprechverbindung zu dieser Sprechstelle 18a erlangen. Die Auswahltaste 17b kann dementsprechend mit einer anderen Sprechstelle 18b des Audio-Netzwerkes 11 der Fig. 3 verbunden werden.

Die Zahl der an eine Vermittlungsstelle 19 angeschlossenen Sprechstellen 10, 18a, 18b ist dabei beliebig und häufig sehr groß.

Ausweislich des Ausführungsbeispiels der Fig. 1 sind insgesamt vier Gruppen von jeweils acht Auswahltasten oder Bedienelementen 17a, 17b, 17cm, 15a, 15b, 15c an der Sprechstelle 10 vorgesehen. Also sind von dieser Sprechstelle 10 insgesamt zweiunddreißig verschiedene Teilnehmer eines Intercom-Netzwerkes 11 ansprechbar. Allerdings können die Bedienelement 15a, 15b, 15c sowie die Auswahltasten 15a, 15b, 15c auch mehrfach belegt sein, so dass beispielsweise aus unterschiedlichen Funktionsebenen hinaus zweimal zweiunddreißig oder gar dreimal zweiunddreißig unterschiedliche Teilnehmer des Intercom-Netzwerkes angesprochen werden können.

Die Bedienelemente 15a, 15b, 15c können neben einem unmittelbaren hör- oder sprechadressierten Ruf einer bestimmen anderen Sprechstelle auch andere Funktionen, wie beispielsweise Gruppenrufe, ermöglichen.

Die Bedienelemente 15a, 15b, 15c sind auch programmierbar. Hierzu kann beispielsweise jeder einzelnen Auswahltaste 17a, 17b, 17c oder jedem einzelnen Bedienelement 15a, 15b, 15c auch ein bestimmter Parameter oder mehrere unterschiedliche Parameter zugewiesen werden. So können beispielsweise individuelle Lautstärkewerte für die einzelnen Bedienelemente 15a, 15b, 15c eingestellt werden. Auch können den Tasten oder Bedienelementen 15a, 15b, 15c, 17a, 17b, 17c auch Namen, Nummerierungen, Bezeichnungen, Abkürzungen oder andere Parameter oder Funktionalitäten zugewiesen werden.

An der Gehäusefront 13 sind darüber hinaus eine Reihe weiterer Elemente und Anschlüsse angeordnet: So ist ausweislich Fig. 1 an der Frontseite 13 ein Mikrofon 44 und ein versteckt angeordneter Lautsprecher 24 angedeutet. Für den Schallaustritt des durch den Lautsprecher 24 gewählten Schalls sind eine Öffnung 28a, 28b in Form eines dafür vorgesehenen Schlitzes 30 vorgesehen.

Weiter sind ein Anschluss 45 für ein Mikrofon und ein Anschluss 46 zum Anschluss eines Headsets vorgesehen. Auch können eine Vielzahl weiterer, nicht dargestellter Anschlüsse und/oder Bedienelemente, Regler, Potentiometer und/oder auch zusätzliche Displays vorgesehen sein. Erwähnt werden der Vollständigkeit halber noch USB-Anschlüsse 52a, 52b an der Gehäusefront.

Die Gehäusefront 13 weist eine insgesamt rechteckige Grundfläche 33 auf. An den Seitenrändern 34a, 34b der Grundfläche sind seitliche Befestigungsabschnitt 42a, 42b angeordnet, die Öffnungen 43 aufweisen. Hiermit wird eine Befestigung der Sprechstelle 10 an einem nicht dargestellten Montagerahmen, einem sogenannten Rack, ermöglicht, wobei die Öffnungen 43 durch Befestigungselemente wie Schrauben durchgriffen werden.

Die Gehäusefront 13 stellt insoweit eine Anordnungsfläche 53 für eine Vielzahl von Anschlüssen und Elementen bereit. Die Anschlusselemente sind dort dicht gedrängt untergebracht.

Auf der Gehäuserückseite 14 sind ausweislich Fig. 2 ebenfalls eine Vielzahl von Anschlüssen 20a, 20b, 20c, 20d, 20e, 20f, 20g, 20h, 20i angeordnet. Es sind beispielsweise Datenkabelanschlüsse 22a, 22b, 22c, ein BNC-Anschluss 23, ein Spannungsversorgungsanschluss 21 und ein Netzspannungsweiterschleifungsanschluss 50 vorgesehen. Insbesondere werden auf der Gehäuserückseite 14 auch die Verbindungsleitungen 48a, 48b, 48c zur Verbindung der jeweiligen Sprechstelle 10 und der Vermittlungsstelle 19 angeschlossen.

Das Gehäuse 12 der Sprechstelle 10 ist im Wesentlichen quaderförmig ausgebildet und umfasst eine Bodenwand 55, eine Deckenwand 56 und vier Seitenwände. Insgesamt sind die Abmessungen des Gehäuses 12, die Höhe HG des Gehäuses 12 und auch die Breite BG des Gehäuses vorgegeben und entspricht einem Unterbringungsraum in einem nicht dargestellten Montagerahmen oder Rack. Die Anordnungsfläche 53 zur Unterbringung und Positionierung von Bedienelementen 15a, 15b, 15c, 17a, 17b, 17c und Anschlüssen 52a, b, 46, 45 sowie von weiteren Elementen 44, 28, 30 oder weiteren Funktionsgeräten ist insoweit begrenzt und vorgegeben.

Jedes der Displays 16a, 16b, 16c, 16d und jedenfalls noch weitere, bei der Sprechstelle 10 der Fig. 1 nicht dargestellte zusätzliche Displays sind als Touchscreen-Displays ausgebildet. Dies bedeutet, dass jedes Display Informationen anzeigen kann, wie es für ein herkömmliches Display üblich ist, als auch die Möglichkeit bereitstellt, dass eine Bedienperson an dem Display durch Betätigung Informationen oder Daten eingeben kann. Für eine Eingabe der Daten ist es erforderlich, dass eine Bedienperson einen oder mehrere Finger an ein entsprechendes Schaltfeld oder eine Schaltfläche auf dem Display annähert oder diese berührt.

Ausweislich Fig. 3 ist das Display 16c dargestellt, das einen ersten Funktionszustand einnimmt. Der erste Funktionszustand wird mit 68 bezeichnet.

In diesem ersten Funktionszustand kann vorgesehen sein, dass das Display 16c der Fig. 4 Informationen erster Art anzeigt. Hierzu sind Informationsanzeigefelder A, B, C vorgesehen. Die Informationen A, B. C erster Art können mit einer bestimmten Auswahltaste, z. B. der Auswahltaste 17d der Sprechstelle 10 der Fig. 1 in Verbindung stehen. Beispielsweise können die Informationen A, B, C erster Art die für diese Auswahltaste 17d eingestellten Parameterwerte, wie Lautstärkewerte umfassen.

Die Information A erster Art kann beispielsweise ein Lautstärkewert für die Auswahltaste 17d sein.

Die Information B erster Art kann Informationen enthalten, mit welcher anderen Sprechstelle des Intercom-Netzwerkes die vorliegende Sprechstelle 10 verbunden wird, wenn die Auswahltaste 17d gedrückt ist. Beispielsweise kann es sich bei der Information B erster Art um die im Intercom-Netzwerk 11 verwendete Bezeichnung dieser bestimmten ausgewählten anderen Sprechstelle (z. B. der Sprechstelle 18a des Intercom-Netzwerkes in Fig. 3) handeln. Beispielsweise kann hier der Wert "Regieanweisung" stehen.

Bei dem Informationswert C kann als Information erster Ar der Name der Bedienperson angezeigt werden, die an der Sprechstelle 18a tätig ist. Wenn die Sprechstelle 18a beispielsweise "Regieanweisung" heißt, kann in dem Feld C beispielsweise der Name "Thomas" angezeigt werden.

Das Display 16c kann also in einem ersten Funktionszustand Informationen A, B, C erster Art anzeigen.

Die erfindungsgemäße Sprechstelle weist einen Mechanismus auf, der ermöglichst, dass das Display 16a aus dem ersten Funktionszustand gemäß Fig. 1 in einen zweiten Funktionszustand 69 gemäß Fig. 5 geschaltet wird. Wie das im Einzelnen erreicht wird, wird später erörtert.

Anhand des Ausführungsbeispiels der Fig. 5 soll zunächst dargelegt werden, dass das Display 16c, wenn es seinen zweiten Funktionszustand 69 erreicht hat, für dieselbe Auswahltaste 17d die Informationen D, E, F zweiter Art anzeigt. Fig. 5 veranschaulicht drei Anzeigefelder D, E, F, über die nun andere, zusätzliche Informationen, die ebenfalls zu der Auswahltaste 17d in Bezug stehen, angezeigt werden. Beispielsweise kann es sich hier bei der Information D zweiter Art um die Anzeige einer Zeit handeln, während der bereits eine Audio-Verbindung zwischen der Sprechstelle 10 und der durch Betätigen der Auswahltaste 17d der Sprechstelle 10 verbundenen weiteren Sprechstelle 18a besteht.

In dem Feld E kann als Information zweiter Art als Information z. B. angezeigt werden, wieviel Zeit den Bedienpersonen der Sprechstellen 10 und 18a noch bleibt, die Audioverbindung fortzuführen. Beispielsweise kann hier ein Timer rückwärtslaufen, der der Bedienperson die verbleibende Restsprechzeit anzeigt.

In dem Informationsfeld F kann als Information F zweiter Art beispielsweise eine Information angezeigt werden, dass irgendeine andere Bedienperson des Intercom-Netzwerks 11 gerade versucht, eine Audioverbindung zu dem Benutzer der Sprechstelle 10 aufzubauen.

Es wird jedenfalls deutlich, dass infolge eines Schaltvorganges des Displays 16c aus einem ersten Funktionszustand 68 gemäß Fig. 4 in einen zweiten Funktionszustand 69 gemäß Fig. 5 andere Informationen, nämlich anstelle der Informationen A, B, C erster Art gemäß Fig. 4 Informationen D, E, F zweiter Art gemäß Fig. 5 angezeigt werden. Infolge des Schaltens des Displays 16c aus dem ersten Funktionszustand 68 in den zweiten Funktionszustand 59 wird eine andere Darstellungsebene erzielt.

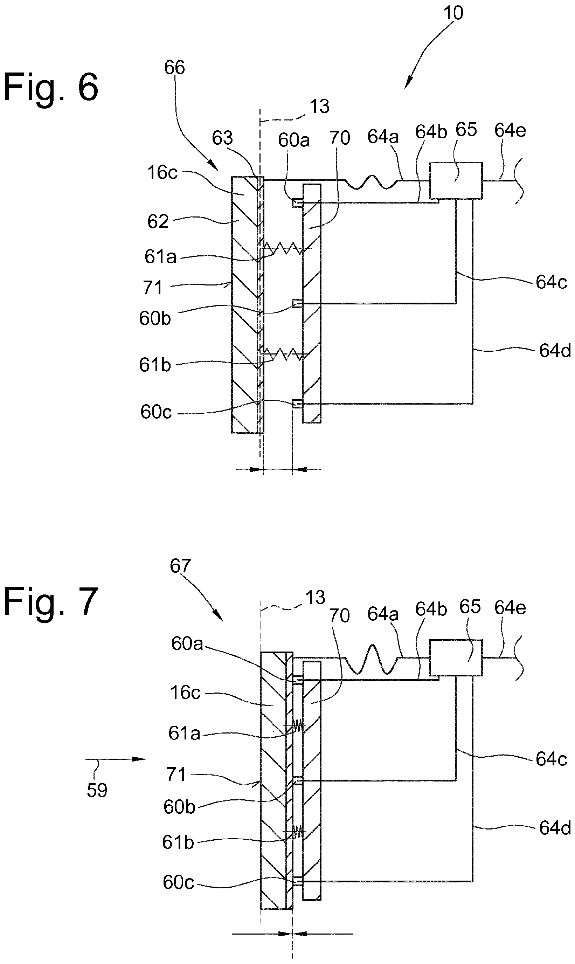

Um den Schaltvorgang vorzunehmen könnte beispielsweise an der Gehäusefront 13 ein Schalter vorgesehen sein, der eine Umschaltung oder eine Hin- und Her-Schaltung zwischen den unterschiedlichen Funktionsebenen zulässt. Die Erfindung geht aber einen gänzlich anderen Weg und sieht vor, dass das Touchscreen-Display 16c selbst als Schalter fungiert und insgesamt entlang einer Verlagerungsrichtung 59 (vgl. Fig. 7) verlagert werden kann.

Ausweislich Fig. 6 wird eine teilgeschnittene, schematische Schnittdarstellung durch das Display 16c und einen Bereich der Sprechstelle 10 gezeigt. Das Display 16c besteht beispielsweise aus einem Glaskörper 62, der z. B. scheibenförmig ausgebildet sein kann und aus einer Sensorschicht 63, die einerseits die Präsenz oder Anwesenheit eines Fingers eines Benutzers detektieren kann, um - wie bei Touchscreens üblich - Eingaben vorzunehmen. Die Sensorschicht 63 ist aber zugleich eine Anzeigeschicht und dient dazu, Informationen A, B, C, D, E, F auf dem Display 16c anzuzeigen.

Die Sensorschicht 63 oder Anzeigeschicht und der Glaskörper 62, der auch aus einem anderen Material als Glas gebildet sein kann, sind insgesamt bewegungseinheitlich miteinander verbunden und entlang oder entgegen der Verlagerungsrichtung 59 zwischen einer Ruheposition 66 gemäß Fig. 6 und einer Schaltposition 67 gemäß Fig. 7 verlagerbar. Die Ruheposition 66 entspricht dabei dem ersten Funktionszustand des Schaltelements 16c gemäß Fig. 4 und die Arbeitsposition oder Schaltposition 67 gemäß Fig. 7 entspricht dabei einem zweiten Funktionszustand des Displays 16c gemäß Fig. 5.

Fig. 6 und 7 machen lediglich sehr schematisch deutlich, dass an einer fest mit dem Gehäuse 12 der Sprechstelle 10 angeordneten Platte 70 oder Abschnitt 70 mehrere Sensoren 60a, 60b, 60c angeordnet sind. Die Platte 70 ist eine Montageplatte oder Montageanordnung. Diese ist fest zu der Gehäusefront 13 angeordnet. Die Gehäusefront 13 ist in Fig. 6 nicht dargestellt, sondern nur angedeutet und verläuft aber beispielsweise etwa entlang der in Fig. 6 und Fig. 7 gestrichelt dargestellten Ebene 13.

Die Figuren 6 und 7 zeigen jeweils drei Sensoren 60a, 60b, 60c, wobei bei anderen Ausführungsbeispielen auch nur ein einziger Sensor 60 oder noch mehr als drei Sensoren für ein Display 16c vorgesehen sein können.

Die Figuren 6 und 7 veranschaulichen, schematisch dargestellt, Federelemente 61a, 61b, die sich mit einem Ende an der Montageplatte 70 und mit dem anderen Ende an dem Display 16c abstützen. Es handelt sich hierbei um Druckfederelemente, die das Display 16c in seine Ruheposition 66 hin beaufschlagen.

Durch Ausübung einer Kraft durch eine Bedienperson entlang der Verlagerungsrichtung 59 auf die der Bedienperson der Sprechstelle 10 entgegenwirkende Vorderfläche 71 des Displays 16c kann dieses, ausgehend von der Ruheposition 66 gemäß Fig. 6, in Verlagerungsrichtung 59 in die Arbeitsposition 67 gemäß Fig. 7 verlagert werden.

Die Sensoren 60a, 60b, 60c können eine solche Verlagerung detektieren. Die Sensoren sind über Signal- oder Steuerleitungen 64b, 64c, 64d mit einem Bauelement 65, das eine Steuerung oder eine Rechnereinheit der Sprechstelle 10 darstellt und/oder umfassen kann, verbunden. Die Steuerung 65 kann wiederum über eine Signalleitung 64e mit einer weiteren nicht dargestellten Steuerung der Sprechstelle 10 verbunden ist. Das Element 65 kann aber auch selbst die Steuerung oder eine Steuerung der Sprechstelle 10 ausbilden.

Mit der Steuerung 65 ist über eine weitere Signalleitung 64a auch das Display 16c verbunden. Über die Steuerleitung 64a, die wie die übrigen Steuerleitungen lediglich schematisch dargestellt ist, kann sowohl eine Ansteuerung des Displays 16c als auch eine Informationsübermittlung der an dem Display 16c eingegebenen Daten erfolgen.

Wenn ausgehend von einer Ruheposition gemäß Fig. 6 das Display verlagert wird, und wenigstens einer der Sensoren 60a, 60b, 60c das Erreichen der Schaltposition 67 feststellt, schaltet die Steuerung 65 das Display 16c aus dem ersten Funktionszustand 68 gemäß Fig. 4 in den zweiten Funktionszustand 69 gemäß Fig. 5. Es werden dem Benutzer dann Informationen D, E, F zweiter Art angezeigt.

Eine Änderung des Funktionszustands aus dem zweiten Funktionszustand 69 gemäß Fig. 5 zurück in den ersten Funktionszustand 68 gemäß Fig. 4 kann z. B. durch nochmalige Verlagerung des Displays 16c aus der Ruheposition 66 in die Arbeitsposition 67 erfolgen. Die Federelemente 61a, 61b können jeweils für eine Rückverlagerung des Displays 16c aus der Arbeitsposition 67 in die Ruheposition 66 sorgen.

Bei einer weiteren Ausgestaltung der Erfindung, die in den Figuren nicht dargestellt ist, kann das Display 16c bei Erreichen der Arbeitsposition 67 in dieser Position verbleiben. Es kann erforderlich sein, nochmals Druck aufzubauen oder Kraft auszuüben, um zu erreichen, dass die Federelemente 61a, 61b eine Rückverlagerung des Displays 16c aus der Arbeitsposition 67 in die Ruheposition 66 veranlassen.

Im Folgenden soll erläutert werden, dass an dem Display 16c, welches als Touchscreen-Display ausgebildet ist, auch Informationen oder Daten eingegeben werden können.

Im Folgenden sei angenommen, Fig. 4 zeige wiederum der Bedienperson Informationen an, die in Fig. 4 als Informationen A, B, C bezeichnet sind, und Informationen erster Art darstellen. Die Informationen A, B, C erster Art sind allerdings in Fig. 4 lediglich rechteckig dargestellte Eingabefelder oder Schaltfelder. Wenn einem Benutzer der Sprechstelle 10 das Display 16c in einem ersten Funktionszustand gemäß Fig. 4 entgegentritt, kann er bei Bedarf oder falls gewünscht, eine Auswahl treffen, und entweder die Schaltfläche A oder die Schaltfläche B oder die Schaltfläche C auswählen. Wählt er im ersten Funktionszustand 68 des Displays der Fig. 4 beispielsweise die Schaltfläche A aus, kann er infolge dieser Auswahl Informationen an dem Touchscreen-Display 16c eingeben.

Beispielsweise kann in dem ersten Funktionszustand der Fig. 4 das Display 16c für eine ausgewählte Auswahltaste (z. B. die Auswahltaste 17d) mit den Schaltfeldern A, B, C eine Auswahlmöglichkeit bereitstellen, ob der Lautstärkewert für diese Auswahltaste 17b auf einen ersten Lautstärkewert A, auf einen dem gegenüber unterschiedlichen z. B. höheren, zweiten Lautstärkewert B oder einen auf einen demgegenüber weiter erhöhten, sehr hohen dritten Lautstärkewert C eingestellt werden soll. Wenn sich das Display 16c in dem ersten Funktionszustand gemäß Fig. 4 befindet, können über die Schaltfelder A, B, C Daten erster Art an dem Display eingegeben werden. Die Dateneingabe wird über die Signalleitung 64a gemäß Fig. 6 auch an die Steuerung 65 übermittelt. Die Steuerung 65 kann diese Daten in einem nicht dargestellten Speicher speichern oder auf eine andere Weise datentechnisch verarbeiten.

Betätigt die Bedienperson der Sprechstelle 10 aber nun das Display 16c der Fig. 4 infolge einer Kraftausübung in Verlagerungsrichtung 59 gemäß Fig. 2 und verlagert die Bedienperson auf diese Weise das Display 16c aus der Ruheposition 66 entsprechend dem ersten Funktionszustand in die Arbeitsposition 67 gemäß Fig. 7, schaltet die Steuerung 65 das Display 16c in einen zweiten Funktionszustand, der in Fig. 5 gezeigt ist. Nun zeigt Fig. 5 Schaltfelder D, E, F an, mittels derer eine Eingabe von Daten zweiter Art möglich ist. Während beispielsweise die Eingabefelder A, B, C des Displays 16c im ersten Funktionszustand gemäß Fig. 4 Lautstärkewerte 1, 2, 3 darstellen, können die Eingabefelder D, E, F andere, z. B. höhere Lautstärkewerte 4, 5, 6 darstellen. Die Bedienperson kann also z. B. durch Betätigung der Schaltfläche E einen Lautstärkewert 5 einstellen.

Damit kann die Bedienperson unmittelbar an dem Touchscreen-Display 16c, an dem eine Eingabe von Daten erfolgt, durch Verlagerung des Displays insgesamt in Verlagerungsrichtung 59, also entlang einem Normalenvektor, der zu der eben ausgerichteten Gehäusefront 13 senkrecht steht, eine weitere zweite Funktionsebene oder einen anderen Funktionszustand 69 des Displays 16c erreichen.

Von der Erfindung sind zahlreiche weitere Ausführungsformen umfasst: So kann beispielsweise vorgesehen sein, dass auf dem Display 16c ein Gleitregler oder sogenannter Slider angeordnet ist, der - wie bei Touchscreen-Displays üblich - durch das Führen einer Fingerspitze eine kontinuierliche Einstellung eines Parameters oder eines anderen Wertes zulässt. Dabei kann vorgesehen sein, dass der Slider zwar in dem ersten Funktionszustand 68 des Displays 16c angezeigt wird, aber erst in Funktion gesetzt wird, wenn die Bedienperson das Display 16c einmalig aus der Ruheposition 66 in die Schaltposition 67 verlagert. Hierdurch wird der Slider erst aktiviert.

Von der Erfindung ist auch umfasst, wenn das Display 16c in einem ersten Funktionszustand lediglich Informationen anzeigt und erst nach Erreichen einer Schaltposition eine Eingabe von Informationen oder Daten zulässt.

Schließlich ist von der Erfindung auch umfasst, wenn das Display in einem ersten Funktionszustand als Touchscreen-Display operiert, und durch einmaliges Betätigen und Verlagern in die Schaltposition von der Steuerung 65 in einen zweiten Funktionszustand 69 geschaltet wird, und bei einem nochmaligen Betätigen des Displays 16c durch Verlagern in die Schaltposition 67 in einen dritten Funktionszustand überführt wird.

Durch weiteres mehrmaliges Betätigen, z. B. auch innerhalb vorgegebener kurzer Zeiträume z. B. weniger Sekundenbruchteile oder weniger Sekunden, können auch noch weitere zusätzliche Funktionszustände erreicht werden.

Insgesamt wird durch die vorgeschlagene Schaltbarkeit des Displays eine besondere komfortable Bedienung einer Sprechstelle 10 erreicht.

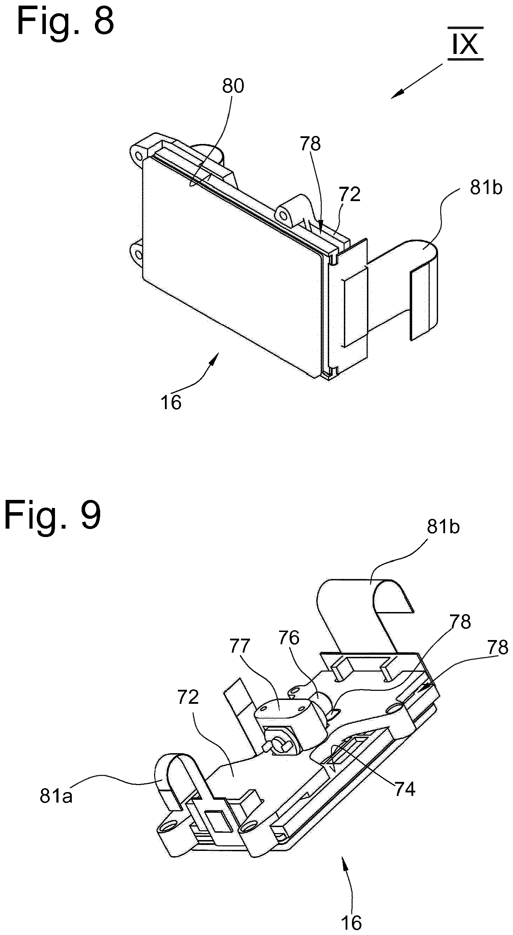

Im Folgenden soll anhand der Ausführungsbeispiele der Fig. 8 bis 10 auf besondere Einzelheiten eines Displays 16 eingegangen werden:
Ausweislich Fig. 8 wird ein Ausführungsbeispiel eines Displays 16 zur Verwendung in einer der vorbeschriebenen Sprechstellen in einer perspektivischen, schematischen Ansicht gezeigt. Das Display 16 ist im wesentlichen rechteckig, und weist zwei Datenkabel 81a, 81b auf, mit denen z. B. Informationen, z. B. Anzeigeinformationen oder Signale, von einer Steuerung der Sprechstelle an das Display oder in umgekehrter Richtung übermittelt werden können.

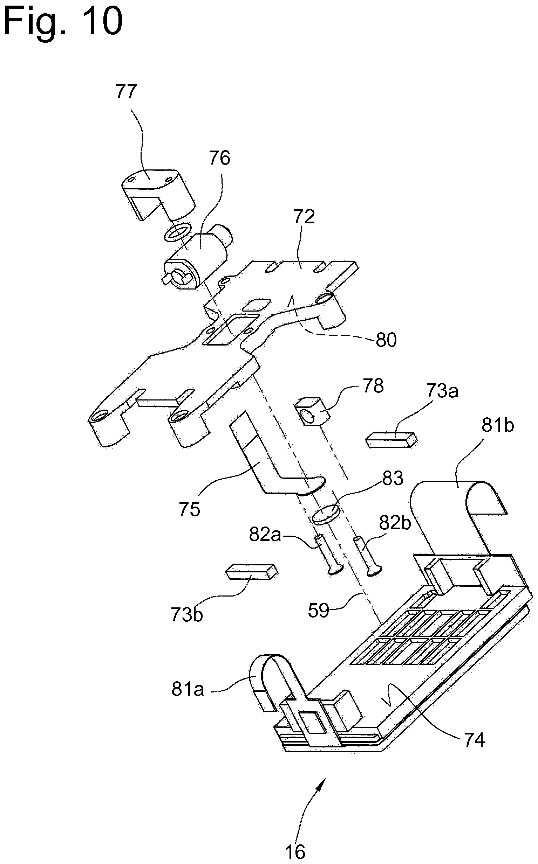

Wie am besten anhand der Explosionsansicht der Fig. 10 erkennbar ist, ist dem Display 16 ein Displayhalter 72 zugeordnet. Dieser ist fest relativ zu der Gehäusefront 13 einer Sprechstelle 10 befestigt.

An dem Displayhalter 72 ist das Display 16 in Axialrichtung 59 axial verlagerbar gehalten. Eine Unverlierbarkeit des Displays 16 an dem Halter 72 kann beispielsweise durch die angedeuteten Befestigungsschrauben 82a, 82b erreicht werden.

Im montierten Zustand befindet sich zwischen einer Rückseite 74 des Displays 16 und einer Vorderseite 80 des Halters 72 ein Bewegungsraum 78. Zwischen der Rückseite 74 des Displays 16 und der Vorderseite 80 des Halters 72 sind darüber hinaus zwei elastische, zumindest geringfügig komprimierbare Elemente 73a, 73b angeordnet. Ausweislich des Ausführungsbeispiels der Fig. 10 sind hier zwei streifenartige Elemente dargestellt, die mit 73a und 73b bezeichnet sind. Es kann sich hier beispielsweise um Streifen eines Doppelklebebandes handeln. Diese sind einerseits komprimierbar, und gewährleisten insoweit eine Abstandsstellung des Displays 16 von dem Halter 72, sorgen infolge der Kompression aber zugleich für eine Rückstellkraft.

An dem Halter 72 ist unter Zuhilfenahme einer Halterung 77 ein Motor 76 mit einer Schwungmasse befestigt. Der Motor 76 wirkt mit einem Ambosselement 78 zusammen, das die Rückseite 74 des Displays 16 beaufschlagen kann.

Ein Sensorelement 83, insbesondere nach Art eines sogenannten bumpers, wirkt mit einer Sensoreinrichtung 75, insbesondere in Form eines FSR-Elementes (FSR=Force Sensing Resistor) zusammen. Dabei kann es sich beispielsweise um ein Bauelement handeln, dessen elektrischer Widerstand unter Krafteinwirkung eine Änderung erfährt. Alternativ kann es sich bei dem Sensor 75 aber auch um einen Dehnungsmessstreifen, um einen Piezokristall, oder beliebige andere Elemente handeln, die eine Kraft oder eine geringfügige Verlagerung aufnehmen und detektieren und z. B. in eine elektrische Spannung wandeln können.

Im einfachsten Fall kann durch das Sensorelement 75 die infolge einer Axialverlagerung des Displays 16 auf die Sensoren 75, 83 ausgeübte Kraft detektiert werden und unmittelbar in ein elektrisches Signal umgewandelt werden. Hierzu kann beispielsweise ein elektrischer Spannungsteiler mit anschließender A/D-(= analog/digital)-Wandlereinheit eine Spannung erzeugen, die dem Motor 76 zugeführt wird. Der Motor kann infolge des Erhalts eines solchen Signals die Schwungmasse betätigen, diese um einen Drehwinkel von z. B. 180° drehen, und hierdurch einen Amboss mit drehen oder betätigen, der wiederum das Display beaufschlagt.

Hierdurch kann an das Display 16 infolge einer Betätigung des Displays im Sinne einer Axialverlagerung eine taktile Rückmeldung für den Benutzer erfolgen.

Wenn die Bedienperson insoweit das Display 16 im Sinne einer Axialverlagerung betätigt, kann dies von dem Sensor 75, 83 detektiert werden, und führt zu einer taktilen Response über Motor und Schwungmasse 76, Amboss 78 und Display 16. Dem Benutzer kann so signalisiert werden, dass die Axialverlagerung im Sinne einer ordnungsgemäßen Schalterbetätigung erfolgt ist.

## Patentansprüche

1. Sprechstelle (10) für ein Intercom-Netzwerk (11), umfassend ein Gehäuse (12), mit einer Gehäusefront (13) und einer Gehäuserückseite (14), wobei an der Gehäusefront eine Vielzahl von Bedienelementen (15a, 15b, 15c) und wenigstens ein Display (16a, 16b, 16c, 16d) angeordnet ist, das als Touchscreen-Display ausgebildet ist, wobei die Bedienelemente eine Vielzahl von Auswahltasten (17a, 17b, 17c, 17d) umfassen, wobei die Sprechstelle infolge einer Betätigung einer Auswahltaste durch eine Bedienperson eine unmittelbare Hör- und/oder Sprechverbindung zu einer ausgewählten anderen Sprechstelle (18a, 18b) des Intercom-Netzwerkes, insbesondere über eine Vermittlungsstelle (19), bereitstellt, wobei an dem Display in einem ersten Funktionszustand (68) des Displays Informationen (A; B, C) erster Art anzeigbar und/oder Daten (A; B; C) erster Art eingebbar sind, die zu wenigstens einem Bedienelement in Bezug stehen, **dadurch gekennzeichnet, dass** das Display (16c) zwischen einer Ruheposition (66) und einer Schaltposition (67) verlagerbar ist, wobei infolge einer Verlagerung des Displays in die Schaltposition das Display einen zweiten Funktionszustand einnimmt, in dem an dem Display Informationen (D; E; F) zweiter Art anzeigbar und/oder Daten (D; E; F) zweiter Art eingebbar sind, die zu wenigstens einem Bedienelement in Bezug stehen.

2. Sprechstelle nach Anspruch 1, **dadurch gekennzeichnet, dass** das Gehäuse (12) quaderförmig oder im Wesentlichen quaderförmig ausgebildet ist.

3. Sprechstelle nach einem der vorangegangenen Ansprüche, **dadurch gekennzeichnet, dass** wenigstens ein Bedienelement (15a, 15b, 15c, 17a, 17b, 17c, 17d) programmierbar ausgebildet ist.

4. Sprechstelle, nach einem der vorangegangenen Ansprüche, **dadurch gekennzeichnet, dass** die Sprechstelle mehrere Displays (16a, 16b, 16c, 16d) aufweist, die jeweils als Touchscreen-Display ausgebildet sind, und die jeweils zwischen einer Ruheposition (66) und einer Schaltposition (67) verlagerbar sind.

5. Sprechstelle nach einem der vorangegangenen Ansprüche, **dadurch gekennzeichnet, dass** die Verlagerung des Displays in die Schaltposition von wenigstens einem Sensor (60a, 60b, 60c, 75, 83) erfassbar ist.

6. Sprechstelle nach Anspruch 5, **dadurch gekennzeichnet, dass** die Sprechstelle eine Steuerung (65) aufweist, die mit dem Sensor (60a, 60b, 60c, 75, 83) in Verbindung steht.

7. Sprechstelle nach Anspruch 6, **dadurch gekennzeichnet, dass** die Steuerung das Display aus seinem ersten Funktionszustand (68) in seinen zweiten Funktionszustand (69) schaltet.

8. Sprechstelle nach Anspruch 6 oder 7, **dadurch gekennzeichnet, dass** die Steuerung eine Schaltung des Displays aus seinem ersten Funktionszustand in seinen zweiten Funktionszustand bei kurzzeitiger und/oder bei fortwährender Verlagerung des Displays in die Schaltposition vornimmt.

9. Sprechstelle nach einem der vorangegangenen Ansprüche 6 bis 8, **dadurch gekennzeichnet, dass** die Steuerung eine Schaltung des Displays aus seinem ersten Funktionszustand in seinen zweiten Funktionszustand bei einmaliger Verlagerung des Displays in die Schaltposition vornimmt.

10. Sprechstelle nach Anspruch 5 oder nach einem auf Anspruch 5 rückbezogenen Anspruch, **dadurch gekennzeichnet, dass** die Steuerung eine Schaltung des Displays aus seinem ersten Funktionszustand in einen dritten Funktionszustand bei mehrfacher, z. B. zweifacher zeitlich kurz aufeinanderfolgender Verlagerung des Displays in die Schaltposition vornimmt.

11. Sprechstelle nach einem der vorangegangenen Ansprüche, **dadurch gekennzeichnet, dass** das Display (16c) vollständig oder abschnittsweise verlagerbar ausgebildet ist.

12. Sprechstelle nach einem der vorangegangenen Ansprüche, **dadurch gekennzeichnet, dass** an der Gehäuserückseite (14) eine Vielzahl von Anschlüssen (20a, 20b, 20c, 20d, 20e, 20f, 20g, 20h, 20i), wie Spannungsversorgungsanschluss, Datenkabelanschluss, BNC-Anschluss, angeordnet ist.

13. Sprechstelle nach einem der vorangegangenen Ansprüche, **dadurch gekennzeichnet, dass** an der Gehäusefront (13) wenigstens ein Lautsprecher (24) und/oder ein Anschluss für einen Lautsprecher fest angeordnet ist.

14. Sprechstelle nach einem der vorangegangenen Ansprüche, **dadurch gekennzeichnet, dass** an der Gehäusefront (13) wenigstens ein Mikrofon (44) und/oder wenigstens ein Anschluss (45) für ein Mikrofon angeordnet ist.

15. Sprechstelle nach einem der vorangegangenen Ansprüche, **dadurch gekennzeichnet, dass** an der Gehäusefront (13) wenigstens ein Anschluss (46) für ein Headset angeordnet ist.

## Claims

1. A communication station (10) for an intercom network (11), comprising a housing (12) with a housing front (13) and a housing rear side (14), wherein a plurality of operating elements (15a, 15b, 15c) and at least one display (16a, 16b, 16c, 16d) are arranged on the housing front, the display being configured as a touchscreen display, wherein the operating elements comprise a plurality of selection buttons (17a, 17b, 17c, 17d), wherein the communication station as a result of an operator actuating a selection button provides a direct listening and/or speaking connection to another selected communication station (18a, 18b) of the intercom network, in particular via a switching station (19), wherein in a first function state (68) of the display information (A; B, C) of a first kind can be displayed and/or data (A; B; C) of a first kind can be entered on the display, the information and/or data relating to at least one operating element, **characterised in that** the display (16c) can be shifted between an inactive position (66) and a switching position (67), wherein as a result of shifting the display into the switching position, the display enters into a second function state, in which information (D; E; F) of a second kind can be displayed and/or data (D; E; F) of a second kind can be entered on the display, the information and/or data relating to at least one operating element.

2. The communication station according to claim 1, **characterised in that** the housing (12) is shaped as a cuboid or essentially shaped as a cuboid.

3. The communication station according to one of the preceding claims, **characterised in that** at least one operating element (15a, 15b, 15c, 17a, 17b, 17c, 17d) is designed to be programmable.

4. The communication station according to one of the preceding claims, **characterised in that** the communication station comprises a number of displays (16a, 16b, 16c, 16d) which are each configured as a touchscreen display, and which can each be shifted between an inactive position (66) and a switching position (67).

5. The communication station according to one of the preceding claims, **characterised in that** the shifting of the display into the switching position can be detected by at least one sensor (60a, 60b, 60c, 75, 83).

6. The communication station according to claim 5, **characterised in that** the communication station comprises a control (65), which is associated with the sensor (60a, 60b, 60c, 75, 83).

7. The communication station according to claim 6, **characterised in that** the control switches the display from its first function state (68) into its second function state (69).

8. The communication station according to claim 6 or 7, **characterised in that** the control switches the display from its first function state into its second function state while the display is being briefly or continuously shifted into the switching position.

9. The communication station according to one of the preceding claims 6 to 8, **characterised in that** the control switches the display from its first function state into its second function state for a one-time shift into the switching position.

10. The communication station according to claim 5 or according to a claim referring back to claim 5, **characterised in that** the control switches the display from its first function state into a third function state while shifting the display repeatedly, for example twice within in short succession, into the switching position.

11. The communication station according to one of the preceding claims, **characterised in that** the display (16c) is designed to be shifted as a whole or section-wise.

12. The communication station according to one of the preceding claims, **characterised in that** a plurality of ports (20a, 20b, 20c, 20d, 20e, 20f, 20g, 20h, 20i) such as a voltage port, a data cable port, a BNC port are arranged on the housing rear side (14).

13. The communication station according to one of the preceding claims, **characterised in that** at least one loudspeaker (24) and/or a port for a loudspeaker is fixedly arranged on the housing front (13).

14. The communication station according to one of the preceding claims, **characterised in that** at least one microphone (44) and/or at least one port (45) for a microphone is arranged on the housing front (13).

15. The communication station according to one of the preceding claims, **characterised in that** at least one port (46) for a headset is arranged on the housing front (13).

## Revendications

1. Poste d'interphonie (10) pour un réseau d'interphonie (11), comprenant un boîtier (12) constitué d'une face avant de boîtier (13) et d'une face arrière de boîtier (14), une multitude d'éléments de commande (15a, 15b, 15c) et au moins un écran qui est configuré comme un écran tactile (16a, 16b, 16c, 16d) étant disposés sur la face avant de boîtier, dans lequel les éléments de commande comprennent une multitude de touches de sélection (17a, 17b, 17c, 17d), ce poste d'interphonie établissant, suite à une activation d'une touche de sélection par un opérateur, une liaison directe en mode d'écoute et/ou de parole avec un autre poste d'interphonie (18a, 18b) choisi du réseau d'interphonie, en particulier par le biais d'un commutateur (19), des informations (A, B, C) d'un premier type pouvant être affichées à l'écran dans un premier mode de fonctionnement (68) de l'écran et/ou des données (A, B, C) d'un premier type qui sont en lien avec au moins un élément de commande pouvant être entrées, **caractérisé en ce que** l'écran (16c) peut être déplacé entre une position de repos (66) et une position de commutation (67), l'écran adoptant, lorsqu'il est placé dans la position de commutation, un deuxième mode de fonctionnement dans lequel des informations (D, E, F) d'un deuxième type peuvent être affichées à l'écran et/ou des données (D, E, F) d'un deuxième type qui sont en lien avec au moins un élément de commande peuvent être entrées.

2. Poste d'interphonie selon la revendication 1, **caractérisé en ce que** le boîtier (12) est de forme parallélépipédique ou sensiblement parallélépipédique.

3. Poste d'interphonie selon une des revendications précédentes, **caractérisé en ce qu'**au moins un élément de commande (15a, 15b, 15c, 17a, 17b, 17c, 17d) est conçu de façon programmable.

4. Poste d'interphonie selon une des revendications précédentes, **caractérisé en ce qu'**il présente plusieurs écrans (16a, 16b, 16c, 16d) qui sont configurés comme des écrans tactiles et qui peuvent être déplacés chacun entre une position de repos (66) et une position de commutation (67).

5. Poste d'interphonie selon une des revendications précédentes, **caractérisé en ce que** le placement de l'écran dans la position de commutation (67) peut être enregistré par au moins un capteur (60a, 60b, 60c, 75, 83).

6. Poste d'interphonie selon la revendication 5, **caractérisé en ce qu'**il possède une commande (65) qui est en liaison avec le capteur (60a, 60b, 60c, 75, 83).

7. Poste d'interphonie selon la revendication 6, **caractérisé en ce que** la commande (65) commute l'écran de son premier mode de fonctionnement (68) à son deuxième mode de fonctionnement (69).

8. Poste d'interphonie selon la revendication 6 ou 7, **caractérisé en ce que** la commande opère une commutation de l'écran de son premier mode de fonctionnement à son deuxième mode de fonctionnement en mettant brièvement et/ou de façon continue l'écran en position de commutation.

9. Poste d'interphonie selon une des revendications précédentes 6 à 8, **caractérisé en ce que** la commande opère une commutation de l'écran de son premier mode de fonctionnement à son deuxième mode de fonctionnement en mettant une fois l'écran en position de commutation.

10. Poste d'interphonie selon la revendication 5 ou selon une revendication renvoyant à la revendication 5, **caractérisé en ce que** la commande opère une commutation de l'écran de son premier mode de fonctionnement à un troisième mode de fonctionnement en mettant plusieurs fois, p. ex. deux fois rapidement l'écran en position de commutation.

11. Poste d'interphonie selon une des revendications précédentes, **caractérisé en ce que** l'écran (16c) est conçu pour pouvoir être déplacé entièrement ou partiellement.

12. Poste d'interphonie selon une des revendications précédentes, **caractérisé en ce qu'**une multitude de connecteurs (20a, 20b, 20c, 20d, 20e, 20f, 20g, 20h, 20i) tels qu'un connecteur d'alimentation électrique, un connecteur de câble de données ou un connecteur BNC sont disposés sur la face arrière du boîtier (14).

13. Poste d'interphonie selon une des revendications précédentes, **caractérisé en ce qu'**au moins un haut-parleur (24) et/ou un connecteur pour un haut-parleur sont fixés sur la face avant du boîtier (13).

14. Poste d'interphonie selon une des revendications précédentes, **caractérisé en ce qu'**au moins un microphone (44) et/ou au moins un connecteur (45) pour un microphone sont disposés sur la face avant du boîtier (13).

15. Poste d'interphonie selon une des revendications précédentes, **caractérisé en ce qu'**au moins un connecteur (46) pour un casque audio est disposé sur la face avant du boîtier (13).
